# EUROPEAN PATENT SPECIFICATION

(11) **EP 1 817 926 B1**
(45) Date of publication and mention of the grant of the patent: **22.09.2010**
(21) Application number: 05824032.6
(22) Date of filing: 29.11.2005
(51) Int. Cl.: H04W 4/14

(54) **PRESENCE MANAGEMENT IN PACKET-SWITCHED NETWORKS USING CIRCUIT-SWITCHED USSD SIGNALLING**
PRÄSENZVERARBEITUNG IN PAKETVERMITTELTEN NETZEN UNTER VERWENDUNG VON DURCHSCHALTEVERMITTELTER USSD SIGNALISIERUNG
GESTION DE PRESENCE DANS DES RESEAUX COMMUTES PAR PAQUETS UTILISANT UNE SIGNALISATION USSD COMMUTEE PAR UN CIRCUIT

(30) Priority: 30.11.2004 US 292
(43) Date of publication of application: 15.08.2007
(73) Proprietor: Telefonaktiebolaget LM Ericsson (publ), 164 83 Stockholm (SE)
(72) Inventor: MILLS, James, L., Frisco, TX 75034 (US)
(74) Representative: HOFFMANN EITLE
(86) International application number: PCT/IB2005/003597
(87) International publication number: WO 2006/059206

(56) References cited:
- WO-A-03/003653
- US-A- 5 745 695

## Description

### BACKGROUND

The present invention relates generally to wireless communication networks, and in particular, to a packet-switched wireless communication network that utilizes circuit-switched Unstructured Supplementary Services Data (USSD) messages to carry presence information.

The Session Initiation Protocol (SIP) initiates, modifies, and terminates interactive communication sessions between users. SIP is an ASCII text-based signaling protocol similar to the Hypertext Transport Protocol (HTTP). Each communication session may include different media types such as audio and video. When initiating a communication session, SIP determines where the called user is located at the particular moment when the session is established. In this way, SIP enables personal mobility by providing the capability to reach a called party at a single location-independent address.

The SIP architecture is based on a client/server model using a request-response paradigm. The main entities in SIP are the User Agent, the SIP Proxy Server, the SIP Redirect Server, and the Registrar. The User Agents, or SIP endpoints, function as User Agent Clients (UACs) when initiating requests, and as User Agent Servers (UASs) when responding to requests. SIP intermediate servers have the capability to behave as proxy or redirect servers. The User Agent sends a registration message to the SIP Registrar, and the Registrar stores the registration information in a location service via a non-SIP protocol.

The 3rd Generation Partnership Project (3GPP) and the Internet Engineering Task Force (IETF) have adopted SIP for establishing, controlling, and maintaining real-time wireless multimedia sessions within an Internet Protocol (IP)-based framework. Since SIP is an ASCII text-based signaling protocol, SIP messages are lengthy. For example, a SIP NOTIFY message is 718 bytes, with the corresponding OK message at 276 bytes. The lengthy messages make signaling over bandwidth-limited wireless channels inefficient.

SIP is also used for session initiation and call control for Push-To-Talk-over-Cellular (PoC) services. PoC is a fast-connect, half-duplex service alternatively known as Push-to-Talk (PTT) or voice chat services. PTT applications provide two-way, one-to-one private calls and one-to-many group call services similar to a walkie-talkie service, but with a number of advantages. Subscribers can take advantage of private, direct, simultaneous radio voice connection over very wide areas, affordably and conveniently, often replacing other devices such as pagers and two-way radios. Subscribers can instantly connect to one or more receivers simply by pushing a button on their handset. Users receiving the call hear the caller's voice automatically without having to answer the call.

PoC is the official name used in the open specifications currently being developed by the Open Mobile Alliance (OMA) for this service. The PoC specifications utilize a number of existing specifications from the Internet Engineering Task Force (IETF), the Third Generation Partnership Project (3GPP), and 3GPP2 including the capabilities of the 3GPP IP Multimedia Subsystem (IMS) and the 3GPP2 Multimedia Domain (MMD) to enable IP connectivity between mobile devices. Technical specifications describing the PoC feature include the 3GPP TS 22.141 and TS 23.141. Additionally, 3GPP 24.841 specifies presence methods using the Session Initiation Protocol (SIP).

PoC may be implemented on the IP backbone over radio technologies such as WCDMA, CDMA2000, GPRS, UMTS, and 802.11. The use of IMS and MMD adds the ability to integrate voice and data services over IP-based packet-switched networks. Two fundamental capabilities are added on top of the packet-switched domain. First is the ability to find a user via SIP to initiate a session. Second is the ability to integrate new services such as PTT. By introducing IMS and its multiple service-delivery capability, a common infrastructure for services is established, and the requirement to build a service delivery infrastructure for each service is eliminated.

"Presence" reporting is currently utilized in PoC to indicate whether a Mobile Station/User Equipment (MS/UE) is available or unavailable for PoC. services. However, in the future, it is anticipated that presence reporting may also be utilized to indicate subscriber call state (i.e. busy/idle/do-not-disturb), location, current communication addresses, and the like. These additional uses for presence reporting would increase the frequency of presence update signaling because updates are sent whenever any part of the presence information changes. This creates a large burden on the network, primarily because of the long ASCII text-based SIP messages discussed above.

One solution is proposed in the paper, Sweeney et al., Efficient SIP based Presence and IM Services with SIP message compression in 1^{ST} OPIUM, Cork Institute of Technology/Adaptive Wireless Systems group (CIT/AWS), September 26, 2003. In this paper, Sweeney et al. propose compressing SIP messages using a Text Compression using Cache and Blank (TCCB) approach. This solution, however, adds additional complexity and results in only modest efficiency gains in the network.

It is also noted that 3GPP 24.841, which specifies presence methods using SIP, states that other bearers besides SIP may be utilized for presence reporting, namely "WAP, SMS, etc." However, using WAP signaling also loads the IP multimedia network, and SMS is not really suitable because SMS messages must pass through an SMS Messaging Center (SMS-C), resulting in increased latency.

WO 03/003653 relates to transcoding SMS-based streamed messages to SIP-based IP signals in wireless and wireline networks. Here, a communication gateway for communicating presence information between a connectionless packet-switched signalling network and an IP network is described. The gateway translates wireless SIP-like messages comprising presence information of an end user into SIP signals for transport over an IP network. The presence information in wireless signals may be transported according to various transport protocols, e.g. SMS, USSD and paging network protocols. A SIP engine translates received SIP-like messages into an SIP-compliant message and then transmits it to a presence agent and server via an IP network. After the translation process is completed, SMS-SIP gateway sends the translated message to a presence agent and server.

US 5,745,695 relates to a radio system with suspension of packet data service during non-data service connection. A mobile station receives a page from a MSC indicating a request to set up a non-GPRS service or non-service-specific operation and the MS signals to the SGSN that it is initiating the non-GPRS service or operation, wherein the MS and SGSN suspend the GPRS context.

### SUMMARY

The present invention aims at providing methods for overcoming the limitations in the prior art and to reduce signalling in networks as well as message size.

This object is achieved by a method of managing presence information having the features of claim 1, by a method in a mobile unit for updating presence information having the features of claim 6 and by a method of reporting presence information for a mobile station in a network having the features of claim 13.

Further advantageous embodiments are described in the dependent claims.

One aspect is directed to a method of managing presence information in a packet-switched wireless communication network. The method includes sending a circuit-switched presence update message from a mobile unit to a presence server in the packet-switched network; and updating the presence information for the mobile unit in the presence server. The circuit-switched presence update message may be an Unstructured Supplementary Services Data (USSD) message that is sent via a USSD gateway. The mobile unit may be a User Equipment (UE) operating in a Wideband Code Division Multiple Access (WCDMA) network, or a Mobile Station (MS) operating in a General Packet Radio Service (GPRS) network.

Another aspect is directed to a method of managing presence information in a packet-switched wireless communication network. The method includes sending a packet-switched presence message from a mobile unit to a presence server in the packet-switched network during initial registration of the mobile unit with the packet-switched wireless communication network. The packet-switched presence message includes presence information for the mobile unit, an identification number for the mobile unit, and an indication that the mobile unit supports circuit-switched presence reporting. The method also includes sending a packet-switched acknowledgment message from the presence server to the mobile unit in response to the packet-switched presence message. The packet-switched acknowledgment message includes an Internet Protocol (IP) address of the presence server and an indication that the presence server supports circuit-switched presence management. Thereafter, the mobile unit determines that a change in the presence status of the mobile unit has occurred, and sends a circuit-switched presence update message to the presence server. The presence information for the mobile unit is updated in the presence server, and all future presence updates are sent via circuit-switched messages. In a preferred embodiment, the circuit-switched presence update messages are USSD messages.

Yet another aspect is directed to a USSD gateway. The USSD gateway includes means for receiving from a mobile unit, a circuit-switched USSD presence update message that includes an IP address of a presence server in a packet-switched wireless communications network. The USSD gateway also includes means for extracting the IP address of the presence server from the USSD message; and means for forwarding the presence update message to the presence server utilizing the extracted IP address of the presence server.

Still yet another aspect is directed to a method of reporting presence information for a mobile station attached for packet-switched operation in a GPRS wireless communication network, wherein the mobile station has entered a STANDBY state. The method includes receiving by the mobile station, a page for a circuit-switched call; suspending packet-switched GPRS operation by the mobile station; and sending a circuit-switched presence update message from the mobile station to a presence server in the GPRS network, said circuit-switched presence update message including an indication that the mobile station is unavailable due to receiving the circuit-switched call. The circuit-switched presence update message may be a USSD message, and the mobile station may periodically send refresh USSD messages to the presence server during the circuit-switched call indicating that the mobile station is still unavailable. Additionally, upon ending the circuit-switched call, the mobile station may send a USSD message to the presence server indicating that the mobile station is available.

### BRIEF DESCRIPTION OF THE SEVERAL VIEWS OF THE DRAWINGS

In the following, the essential features of the invention will be described in detail by showing preferred embodiments, with reference to the figures of the attached drawings, in which:
FIG. 1 is a flow chart illustrating the steps of a method of presence reporting in a WCDMA network in accordance with the teachings of the present invention; and
FIG. 2 is a flow chart illustrating the steps of a method of sending presence updates in a GPRS network When an MS attached for packet-switched GPRS operation is paged for a circuit-switched call.

### DETAILED DESCRIPTION

The present invention is a method of presence management that greatly reduces the load on a packet-switched wireless communication network. Instead of using SIP signaling for presence management, the present invention uses circuit-switched signaling. In particular, the present invention uses circuit-switched Unstructured Supplementary Services Data (USSD) messages to carry the presence information. USSD is a circuit-switched service that allows proprietary services to be overlaid on existing mobile networks, with only generic support of the USSD mechanisms in the networks. Because USSD is a circuit-switched service and utilizes dedicated signaling connections between the terminal and network-based applications, USSD is not normally considered for use as a bearer for a packet-switched Voice-over-IP (VoIP) service.

Compared to SIP signaling or compressed SIP signaling, the present invention results in reduced signaling in IP multi-media network nodes, for both Wideband Code Division Multiple Access (WCDMA) and Global System for Mobile Communications/General Packet Radio Service (GSM/GPRS) networks. The invention also results in reduced signaling in WCDMA radio access networks. Additionally, the present invention significantly reduces message size over the bandwidth-limited air interface.

Utilizing Push-To-Talk-over-Cellular (PoC) as an example, the implementation of the present invention will now be described. In an exemplary existing PoC system, each MS having a PoC client initially registers with a PoC server using SIP signaling. Next, the MS registers with the presence server (using a SIP PUBLISH message) to indicate that it is available. The SIP PUBLISH message is sent to the presence server with an expiry time set to match the expiry time of the registration. Periodically the MS re-registers with the presence server (also with the SIP PUBLISH message), to indicate that the MS is still available for PoC services. The MS updates the presence information by sending a new SIP PUBLISH message whenever there is a change in status. At de-registration or power-off, the MS sends a PUBLISH message with the expiry time set to zero. If the MS roams out of coverage, and the time expires in the presence server, the presence server changes the availability state to "unavailable".

In the exemplary implementation, the PoC client in the MS also requests individual or group presence information from the presence server (using the SIP operation, SUBSCRIBE NOTIFY), whenever the user selects a PoC contact menu screen on the MS. Alternatively, the presence server may automatically push this information to the PoC client whenever a change of status is detected, but this causes more signaling, much of which is unnecessary since the updates are only needed when the subscriber is viewing the contact list. Despite design efforts to reduce the volume of SIP signaling, it is estimated that, with existing presence management procedures, approximately 50 percent of the SIP signaling through the Call State Control Functions (CSCFs) (with PoC implemented) is used to maintain the presence information in the presence server.

When the user subscribes to a contact list (instead of an individual MS), the SUBSCRIBE request goes first to a Resource List Server (RLS). The RLS then propagates individual SUBSCRIBE requests to the presence server. Since the IMS core system does not know where to route SIP messages to a contact list, the group/list functionality is integrated with the presence server by naming all of the contact lists with a domain name of the RLS (e.g., contactlist_user1@presence.com). In this way, all SUBSCRIBE requests for the contact list are routed to the RLS.

The present invention modifies the client in the MS/UE to send presence updates to the presence server utilizing circuit-switched USSD messages. The presence server may be modified to receive the USSD presence updates from the MS/UE, or alternatively, to receive USSD MAP signaling sent by the HLR. Additionally, a USSD gateway is modified to receive the USSD presence updates from the MS/UE, extract an IP address for the presence server, and forward the presence update message to the presence server.

The presence server may also use USSD messages to push the group's presence status to the MS/UE. USSD signaling is much more efficient than SIP signaling over the air interface, in terms of message sizes. For example, while the SIP NOTIFY message is 718 bytes, and its corresponding OK message is 276 bytes, a USSD REGISTER (FACILITY) message is only approximately 66 bytes, including a header of 26 bytes and user data of approximately 40 bytes (including the Mobile Station Integrated Services Digital Network (MSISDN) of the UE, IP-address/port of the presence server, possibly the Signaling Point Code (SPC) of the presence server, and UE status).

Another benefit of using circuit-switched USSD messages for presence reporting is that signaling through the IP Multi-Media (IPMM) nodes is significantly reduced, because the circuit-switched signaling goes from the serving Mobile Switching Center (MSC) to the user's Home Location Register (HLR), from the HLR to the USSD gateway, and from the USSD gateway to the presence server (using either SS7 or IP). If PoC is implemented for WCDMA MS/UE's, and an MS/UE is in a state where it does not have a signaling connection, then the presence update utilizing SIP requires that a Radio Resource Control (RRC) connection be re-established, that an lu-PS signaling connection be established, and that the PDP context Radio Access Bearers (RABs) be allocated. Use of USSD improves latency because the circuit-switched update messages require only that the RRC connection and the lu-CS signaling connection be established. The RABs do not need to be allocated for the USSD update message. This also results in less signaling over the air interface.

There are similar advantages for GSM/GPRS networks, but in addition, it is noted that USSD presence updates can be made while a circuit-switched call is in-progress or when the call is being initiated or terminated.

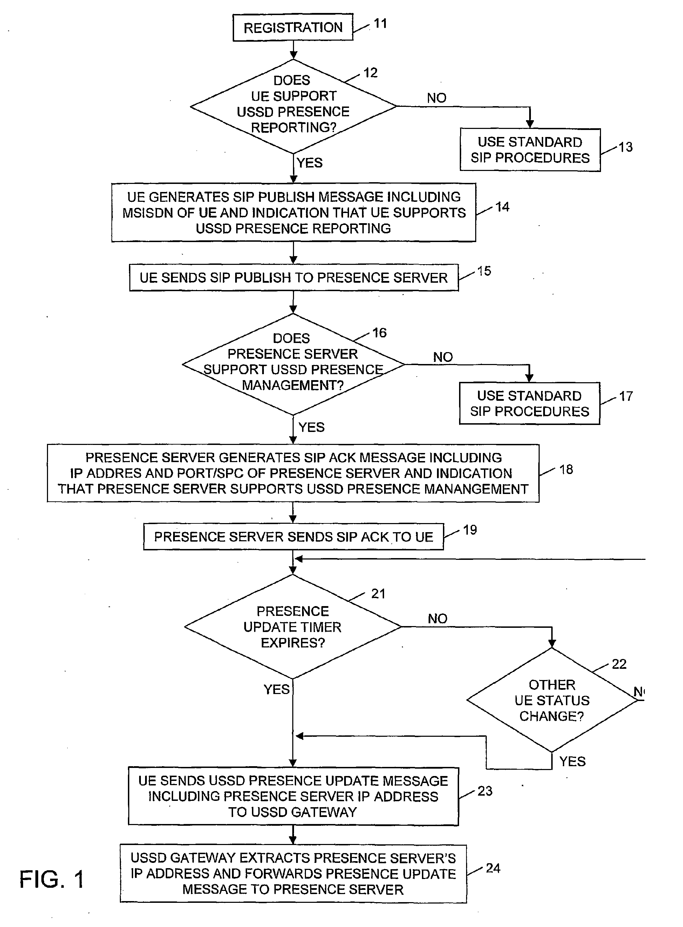

FIG. 1 is a flow chart illustrating the steps of an embodiment of the present invention in a WCDMA network. In WCDMA networks, the present invention substitutes circuit-switched USSD signaling for the "refresh" SIP PUBLISH signaling (i.e., all presence updates after the initial registration with the presence server). The initial publication (at registration) still uses the standardized SIP PUBLISH method from the UE to the presence server. Thus, at step 11, the UE begins registration with the network. At step 12, it is determined whether the UE supports USSD presence reporting. If not, the method moves to step 13 where the UE utilizes standard SIP procedures for presence reporting. However, if the UE supports USSD presence reporting, the method moves to step 14 where the UE generates an initial SIP PUBLISH message. The message includes the MSISDN of the UE together with an indication that the UE supports USSD for refreshing the presence information. The MSISDN is used for return addressing, and to identify the UE to the presence server when USSD signaling is used. At step 15, the UE sends the SIP PUBLISH message to the presence server.

At step 16, it is determined whether the presence server supports USSD presence management. If not, the method moves to step 17 where the presence server utilizes standard SIP procedures for presence management. However, if the UE supports USSD presence management, the method moves to step 18 where the presence server generates a SIP ACK message. The ACK message includes the IP address and port or SPC of the presence server together with an indication that the presence server supports USSD presence management. At step 19, the presence server sends the SIP ACK message to the UE.

As noted above, the present invention substitutes USSD signaling for all presence updates after the initial registration with the presence server. Therefore, the UE sends all refresh signaling via circuit-switched USSD messages instead of SIP. At step 21, it is determined whether a presence update timer has expired, requiring that a presence update message be sent to the presence server. If not, the method moves to step 22 where it is determined whether any other change in the presence status of the UE has occurred. If not, the method returns to step 21 and waits for the update timer to expire. If the timer expires, or another change in the presence status of the UE occurs, the method moves to step 23 where the UE sends a circuit-switched USSD presence update message to a USSD gateway (external to the HLR/HSS). The UE includes the IP address of the presence server in the update message. For example, the presence server's IP address may be included in the USSD user data. At step 24, a USSD application on the USSD gateway extracts the presence server's IP address, and uses the IP address to forward the presence update message (and subsequent update messages) to the correct presence server.

The present invention also substitutes USSD signaling for the SIP NOTIFY messages in networks where notifications are sent periodically (versus only on request by the UE). The initial SIP SUBSCRIBE/SIP NOTIFY sequence is not changed from 3GPP 24.841, except that the presence server receives the UE's MSISDN and a new indication that the UE supports the USSD presence reporting. Periodically thereafter, the presence server sends a USSD notification to the UE client, and receives an acknowledgement.

The use of the proposed method overcomes several inefficiencies in the standardized method. After PDP context establishment and registration with the PoC server (and subsequent registration with the presence server), if no PoC call is made, the traffic on the air interface drops to zero. The down-switch timer (1-10 seconds) then causes the UE to change from CELL_DCH to CELL_FACH, as the initial dedicated transport channels are replaced with common transport channels. The RNC inactivity-timer also starts and subsequently expires (default of 30 seconds). This expiration triggers the RNC to send an lu-release-request message to the core network. The core network may refuse the lu-release-request if application-layer connections exist. Normally the core network accepts, so the RRC connection, as well as the lu-PS signaling connection and RAB's are released, and the UE enters CELL_PCH state.

SIP signaling for PoC is on the primary PDP context for the session, and thus an interactive class RAB is required. If the UE is in CELL_PCH state, the presence re-registration using SIP requires that the RAB must be re-established. The RRC connection between the Radio Network Controller (RNC) and the UE is first re-established. The lu-PS signaling connection between the RNC and the MSC server is next established, and then the RAB is allocated. The USSD DTAP message, on the other hand, is sent via the signaling connection, so it is not necessary to re-establish the RAB, just the RRC connection and lu-CS signaling connection. This results in less signaling over the air-interface, and therefore less latency as well.

Another advantage of USSD signaling (versus SIP) is that the signaling does not use the IP multimedia network. The signaling is through the MSC and HLR, and then via a dedicated IP (or MAP) connection to the presence server. This also results in less latency of the presence status updates.

Note that if the presence server uses USSD signaling to update contact list information at the UE, then the UMTS Subscriber Identity Module (USIM) would also need to support application-mode signaling to the PoC client.

GSM/GPRS networks realize similar advantages from the smaller message sizes over the air interface and the reduced number of messages in the IMS nodes. GSM/GPRS Type-B MSs can monitor both circuit-switched and packet-switched control channels simultaneously, but cannot operate services on circuit-switched and packet-switched domains simultaneously. A Stand-alone Dedicated Control Channel (SDCCH) is required to deliver the circuit-switched USSD message. So when the MS is attached for GPRS operation (STANDBY state), and is paged for circuit-switched dedicated mode, the MS suspends the packet-switched GPRS service. As long as the circuit-switched connection (i.e., the SDCCH) is present, the packet-switched service remains suspended. When the circuit-switched connection is subsequently dropped, the MS performs a Routing Area Update (RAU) or combined RAU, depending upon the network operation mode (i.e., Gs interface used, etc.). The RAU enables the Serving GPRS Service Node (SGSN) to continue sending an interrupted packet flow to the MS.

For sending presence status using SIP, a Type-B MS in STANDBY state uses a Random Access Channel (RACH) request or Packet Random Access Channel (PRACH) request to send a PACKET CHANNEL REQUEST to the SGSN. The MS receives a PACKET UPLINK ASSIGNMENT from the SGSN. Upon sending the last uplink data block, the radio resources are released again.

With the USSD signaling method of the present invention, the SDCCH is allocated and used to send a USSD REGISTER message. Although there is not much difference in the number of messages sent in the RAN, the message size is much smaller, thereby significantly reducing the required bandwidth over the air interface.

An additional advantage of the USSD signaling method in a GSM network is that the USSD signaling method enables the MS to update the presence server when a circuit-switched call is initiated, on-going, and terminated. This is a useful feature, since the MS would have previously registered as "available", but could not send an update via SIP after being paged for a circuit-switched call. Therefore the MS would be "available" to the presence server, while the MS is actually "not available" due to the current circuit-switched call.

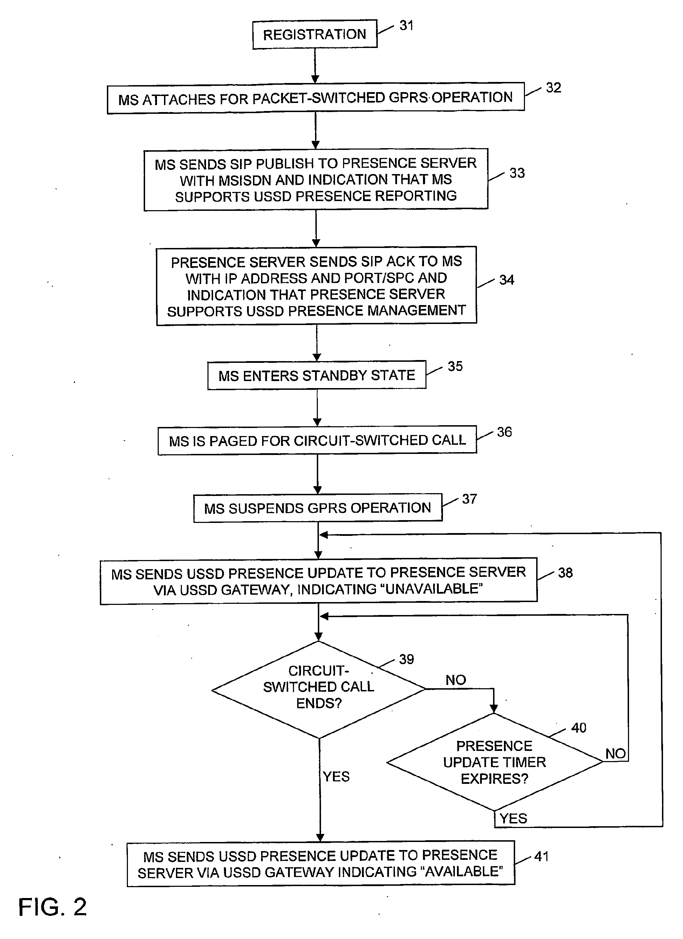

FIG. 2 is a flow chart illustrating the steps of a method of sending presence updates when an MS attached for GPRS operation is paged for a circuit-switched call. At step 31, the MS begins registration with a GPRS network. At step 32, the MS attaches for packet-switched GPRS operation. At step 33, the MS sends a SIP PUBLISH message to the presence server with the MSISDN of the MS and an indication that the MS supports USSD presence reporting. At step 34, the presence server sends a SIP ACK message to the MS with the IP address and port or SPC of the presence server, and an indication that the presence server supports USSD presence management.

At some later time, as shown at step 35, the MS enters the STANDBY state. Thereafter, at step 36, the MS is paged for a circuit-switched call. At step 37, the MS suspends packet-switched GPRS operation to respond to the page and take the circuit-switched call. At step 38, the MS sends a circuit-switched USSD presence update message to the presence server via the USSD gateway. The update message indicates that the MS is "unavailable". At step 39, it is determined whether the circuit-switched call ends. If not, the method moves to step 40 where it is determined whether a presence update timer expires. If not, the method returns to step 39 and waits for either the circuit-switched call to end or the presence timer to expire, whichever occurs first. If the presence update timer expires first, the method returns to step 38 where the MS sends a circuit-switched USSD presence update message to the presence server indicating that the MS is still "unavailable". However, if the circuit-switched call ends first, the method moves to step 41 where the MS sends a circuit-switched USSD presence update message to the presence server, via the USSD gateway, indicating that the MS is now "available".

The present invention may of course, be carried out in other specific ways than those set forth in the description without departing from the scope determined by the appended claims. The described embodiments are, therefore, to be considered in all respects as illustrative and not restrictive and all changes coming within the scope of the appended claims are intended to be embraced therein.

## Claims

1. A method of managing presence information in a packet-switched wireless communication network, said method comprising:
sending a packet-switched presence message from a mobile unit to a presence server in the packet-switched wireless communication network during initial registration of the mobile unit with the packet-switched wireless communication network (14, 15), said packet-switched presence message including presence information for the mobile unit, an identification number for the mobile unit, and an indication that the mobile unit supports circuit-switched presence reporting;
sending a packet-switched acknowledgment message from the presence server to the mobile unit in response to the packet-switched presence message (19), said packet-switched acknowledgment message including an Internet Protocol, hereinafter returned as IP address of the presence server and an indication that the presence server supports circuit-switched presence management;
thereafter, determining by the mobile unit that a change in the presence status of the mobile unit has occurred (21, 22);
sending a circuit-switched presence update message from the mobile unit to the presence server (23); and updating the presence information for the mobile unit in the presence server (24).

2. The method of claim 1, wherein the mobile unit is a User Equipment operating in a Wideband Code Division Multiple Access network.

3. The method of claim 1, wherein the mobile unit is a Mobile Station operating in a General Packet Radio Service network.

4. The method of claim 1, wherein the step of sending a circuit-switched presence update message includes sending an Unstructured Supplementary Services Data, hereinafter returned as USSD message from the mobile unit to the presence server.

5. The method of claim 4, wherein the step of sending a USSD message from the mobile unit to the presence server includes:
placing the IP address of the presence server in the USSD message;
sending the USSD message to a USSD gateway;
extracting the IP address of the presence server from the USSD message by the USSD gateway; and
forwarding the presence update message to the presence server utilizing the extracted IP address of the presence server.

6. A method in a mobile unit for updating presence information for the mobile unit in a presence server in a packet-switched wireless communication network, said method comprising:
sending from the mobile unit to the presence server, identification information and initial presence information for the mobile unit (14, 15) as well as an indication that it supports circuit-switched presence reporting;
determining by the mobile unit that the presence server supports circuit-switched presence management (16);
thereafter, determining by the mobile unit that a change in the presence status of the mobile unit has occurred (21, 22); and
sending a circuit-switched presence update message from the mobile unit to the presence server in the packet-switched wireless communication network (23);
whereby the presence information for the mobile unit is updated in the presence server.

7. The method of claim 6, wherein the step of sending identification information and initial presence information from the mobile unit to the presence server includes sending a packet-switched presence message from the mobile unit to the presence server during initial registration of the mobile unit with the packet-switched wireless communication network, said packet-switched presence message including presence information for the mobile unit, an identification number for the mobile unit, and an indication that the mobile unit supports circuit-switched presence reporting.

8. The method of claim 7, wherein the step of determining by the mobile unit that the presence server supports circuit-switched presence management includes receiving by the mobile unit, a packet-switched acknowledgment message sent from the presence server in response to the packet-switched presence message, said packet-switched acknowledgment message including an indication that the presence server supports circuit-switched presence management.

9. The method of claim 6, wherein the mobile unit is a User Equipment operating in a Wideband Code Division Multiple Access network.

10. The method of claim 6, wherein the mobile unit is a Mobile Station operating in a General Packet Radio Service network.

11. The method of claim 6, wherein the step of sending a circuit-switched presence update message includes sending an Unstructured Supplementary Services Data message from the mobile unit to the presence server.

12. The method of claim 11, further comprising periodically sending refresh USSD messages from the mobile unit to the presence server if the presence status of the mobile unit has not changed.

13. A method of reporting presence information for a mobile station attached for packet-switched operation in a General Packet Radio Service, hereinafter returned as GPRS wireless communication network, said method comprising:
sending a packet-switched presence message from the mobile station to the presence server during initial registration of the mobile unit with the GPRS network (33), said packet-switched presence message including presence information for the mobile unit, an identification number for the mobile unit, and an indication that the mobile unit supports circuit-switched presence reporting;
receiving by the mobile station (34), a packet-switched acknowledgment message sent from the presence server in response to the packet-switched presence message, said packet-switched acknowledgment message including an indication that the presence server supports circuit-switched presence management;
thereafter, entering a STANDBY state by the mobile station (35);
receiving by the mobile station, a page for a circuit-switched call (36);
suspending packet-switched GPRS operation by the mobile station (37); and
sending a circuit-switched presence update message from the mobile station to a presence server in the GPRS network (38), said circuit-switched presence update message including an indication that the mobile station is unavailable.

14. The method of claim 13, wherein the step of sending a circuit-switched presence update message includes sending an Unstructured Supplementary Services Data message from the mobile station to the presence server.

15. The method of claim 14, wherein the step of sending a USSD message from the mobile station to the presence server includes:
placing the IP address of the presence server in the USSD message;
sending the USSD message to a USSD gateway;
extracting the IP address of the presence server from the USSD message by the USSD gateway; and
forwarding the presence update message to the presence server utilizing the extracted IP address of the presence server.

16. The method of claim 15, wherein the step of sending a USSD message from the mobile station to the presence server also includes placing the mobile station's Mobile Station Integrated Services Digital Network (MSISDN) number in the USSD message to identify the mobile station to the presence server.

17. The method of claim 16, further comprising:
periodically sending refresh USSD messages from the mobile station to the presence server during the circuit-switched call, said refresh USSD messages including an indication that the mobile station is still unavailable.

18. The method of claim 16, further comprising:
ending the circuit-switched call by the mobile station; and
sending a second USSD message from the mobile station to the presence server, said second USSD message including an indication that the mobile station is available.

## Patentansprüche

1. Ein Verfahren zum Managen von Anwesendheitsinformation in einem paketvermittelten drahtlosen Kommunikationsnetz, wobei das Verfahren umfasst:
Senden einer paketvermittelten Anwesendheitsnachricht von einer Mobileinheit an einen Anwesendheitsserver in dem paketvermittelten drahtlosen Kommunikationsnetz während einer Anfangsregistrierung der Mobileinheit bei dem paketvermittelten drahtlosen Kommunikationsnetz (14, 15), wobei die paketvermittelte Anwesendheitsnachricht eine Anwesendheitsinformation für die Mobileinheit, eine Identifikationsnummer für die Mobileinheit und einen Hinweis enthält, dass die Mobileinheit eine leitungsvermittelte Anwesendheitsmitteilung unterstützt;
Senden einer paketvermittelten Bestätigungsnachricht von dem Anwesendheitsserver an die Mobileinheit in Ansprechen auf die paketvermittelte Anwesendheitsnachricht (19), wobei die paketvermittelte Bestätigungsnachricht eine Internet-Protokoll-, hier im Folgenden bezeichnet als IP, Adresse des Anwesendheitsservers und einen Hinweis enthält, dass der Anwesendheitsserver eine leitungsvermittelte Anwesendheitsverwaltung unterstützt;
danach Bestimmen durch die Mobileinheit, dass eine Änderung in dem Anwesendheitsstatus der Mobileinheit aufgetreten ist (21, 22);
Senden einer leitungsvermittelten Anwesendheitsaktualisiernachricht von der Mobileinheit an den Anwesendheitsserver (23); und
Aktualisieren der Anwesendheitsinformation für die Mobileinheit in dem Anwesendheitsserver (24).

2. Das Verfahren nach Anspruch 1, wobei die Mobileinheit ein Benutzergerät ist, das in einem Breitband-Code-Vielfachzugriffsnetz arbeitet.

3. Das Verfahren nach Anspruch 1, wobei die Mobileinheit eine Mobilstation ist, die in einem Allgemeinen-Paketfunkservice-Netz (GPRS) arbeitet.

4. Das Verfahren nach Anspruch 1, wobei der Schritt eines Sendens einer leitungsvermittelten Anwesendheitsaktualisiernachricht ein Senden enthält von unstrukturierten Zusatzservicedaten, hier im Folgenden bezeichnet als USSD-Nachricht, von der Mobileinheit zu dem Anwesendheitsserver.

5. Das Verfahren nach Anspruch 4, wobei der Schritt eines Sendens einer USSD-Nachricht von der Mobileinheit zu dem Anwesendheitsserver enthält:
Platzieren der IP-Adresse des Anwesendheitsservers in die USSD-Nachricht;
Senden der USSD-Nachricht an einen USSD-Gateway;
Extrahieren der IP-Adresse des Anwesendheitsservers von der USSD-Nachricht durch den USSD-Gateway; und
Weiterleiten der Anwesendheitsaktualisiernachricht an den Anwesendheitsserver, der die extrahierte IP-Adresse des Anwesendheitsservers verwendet.

6. Ein Verfahren in einer Mobileinheit zum Aktualisieren von Anwesendheitsinformation für die Mobileinheit in einem Anwesendheitsserver in einem paketvermittelten drahtlosen Kommunikationsnetz, wobei das Verfahren umfasst:
Senden von der Mobileinheit an den Anwesendheitsserver, Identifikationsinformation und Anfangsanwesendheitsinformation für die Mobileinheit (14, 15), sowie einen Hinweis, dass eine leitungsvermittelte Anwesendheitsmitteilung unterstützt wird;
Bestimmen durch die Mobileinheit, dass der Anwesendheitsserver ein leitungsvermitteltes Anwesendheitsmanagement (16) unterstützt;
danach Bestimmen durch die Mobileinheit, dass eine Änderung in dem Anwesendheitsstatus der Mobileinheit aufgetreten ist (21, 22); und
Senden einer leitungsvermittelten Anwesendheitsaktualisiernachricht von der Mobileinheit an den Anwesendheitsserver in dem paketvermittelten drahtlosen Kommunikationsnetz (23);
wobei die Anwesendheitsinformation für die Mobileinheit aktualisiert wird in dem Anwesendheitsserver.

7. Das Verfahren nach Anspruch 6, wobei der Schritt eines Sendens von Identifikationsinformation und Anfangsanwesendheitsinformation von der Mobileinheit an den Anwesendheitsserver Senden einer paketvermittelten Anwesendheitsnachricht enthält von der Mobileinheit an den Anwesendheitsserver während einer Anfangsregistrierung der Mobileinheit mit dem paketvermittelten drahtlosen Kommunikationsnetz, wobei die paketvermittelte Anwesendheitsnachricht eine Anwesendheitsinformation für die Mobileinheit enthält, eine Identifikationsnummer für die Mobileinheit und einen Hinweis, dass die Mobileinheit eine schaltungsvermittelte Anwesendheitsmitteilung unterstützt.

8. Das Verfahren nach Anspruch 7, wobei der Schritt eines Bestimmens durch die Mobileinheit, dass der Anwesendheitsserver ein schaltungsvermitteltes Anwesendheitsmanagement unterstützt, ein Empfangen durch die Mobileinheit einer paketvermittelten Bestätigungsnachricht enthält, die gesendet wird von dem Anwesendheitsserver in Ansprechen auf die paketvermittelte Anwesendheitsnachricht, wobei die paketvermittelte Bestätigungsnachricht einen Hinweis enthält, dass der Anwesendheitsserver ein schaltungsvermitteltes Anwesendheitsmanagement unterstützt.

9. Das Verfahren nach Anspruch 6, wobei die Mobileinheit ein Benutzergerät ist, das in einem Breitbandcode-Vielfachzugriffsnetz arbeitet.

10. Das Verfahren nach Anspruch 6, wobei die Mobileinheit eine Mobilstation ist, die in einem Allgemeinen-Paketfunkservicenetz (GPRS) arbeitet.

11. Das Verfahren nach Anspruch 6, wobei der Schritt eines Sendens einer schaltungsvermittelten Anwesendheitsaktualisiernachricht ein Senden einer Unstrukturierte-Zusatzservicedaten-Nachricht enthält von der Mobileinheit an den Anwesendheitsserver.

12. Das Verfahren nach Anspruch 11, ferner umfassend periodisches Senden von Aktualisier-USSD-Nachrichten von der Mobileinheit an den Anwesendheitsserver, falls der Anwesendheitsstatus der Mobileinheit sich nicht verändert hat.

13. Ein Verfahren eines Mitteilens von Anwesendheitsinformation für eine Mobilstation, angebracht für einen paketvermittelten Betrieb in einem Allgemeine-Paketfunkservice-, hier im Folgenden bezeichnet als GPRS, drahtlosen Kommunikationsnetz, wobei das Verfahren umfasst:
Senden einer paketvermittelten Anwesendheitsnachricht von der Mobilstation an den Anwesendheitsserver während einer Anfangsregistrierung der Mobileinheit mit dem GPRS-Netz (33), wobei die paketvermittelte Anwesendheitsnachricht eine Anwesendheitsinformation für die Mobileinheit enthält, sowie eine Identifikationsnummer für die Mobileinheit, und einen Hinweis, dass die Mobileinheit eine schaltungsvermittelte Anwesendheitsmitteilung unterstützt;
Empfangen durch die Mobilstation (34) einer paketvermittelten Bestätigungsnachricht, die gesendet wird von dem Anwesendheitsserver in Ansprechen auf die paketvermittelte Anwesendheitsnachricht, wobei die paketvermittelte Bestätigungsnachricht einen Hinweis enthält, dass der Anwesendheitsserver ein schaltungsvermitteltes Anwesendheitsmanagement unterstützt;
danach Eintreten in einen STANDBY-Zustand von der Mobilstation (35);
Empfangen durch die Mobilstation eines Funkrufs für einen schaltungsvermittelten Anruf (36);
Unterbrechen eines paketvermittelten GPRS-Betriebs durch die Mobilstation (37); und
Senden einer leitungsvermittelten Anwesendheitsaktualisiernachricht von der Mobilstation an einen Anwesendheitsserver in dem GPRS-Netz (38), wobei die leitungsvermittelte Anwesendheitsaktualisiernachricht einen Hinweis enthält, dass die Mobilstation nicht verfügbar ist.

14. Das Verfahren nach Anspruch 13, wobei der Schritt eines Sendens einer leitungsvermittelten Anwesendheitsaktualisiernachricht ein Senden einer Unstrukturierte-Zusatzservicedaten-Nachricht von der Mobilstation an den Anwesendheitsserver enthält.

15. Das Verfahren nach Anspruch 14, wobei der Schritt eines Sendens einer USSD-Nachricht von der Mobilstation an den Anwesendheitsservern enthält:
Platzieren der IP-Adresse des Anwesendheitsservers in der USSD-Nachricht;
Senden der USSD-Nachricht an einen USSD-Gateway;
Extrahieren der IP-Adresse des Anwesendheitsservers von der USSD-Nachricht durch den USSD-Gateway; und
Weiterleiten der Anwesendheitsaktualisiernachricht an den Anwesendheitsserver, der die extrahierte IP-Adresse des Anwesendheitsservers verwendet.

16. Das Verfahren nach Anspruch 15, wobei der Schritt eines Sendens einer USSD-Nachricht von der Mobilstation an den Anwesendheitsserver auch enthält Platzieren der Integrierte-Dienste-Digitalnetz-(MSISDN)-Nummer der Mobilstation in der USSD-Nachricht zum Identifizieren der Mobilstation an dem Anwesendheitsserver.

17. Das Verfahren nach Anspruch 16, ferner umfassend:
periodisches Senden von Aktualisier-USSD-Nachrichten von der Mobilstation an den Anwesendheitsserver während dem leitungsvermittelten Anruf, wobei die Aktualisier-USSD-Nachrichten einen Hinweis enthalten, dass die Mobilstation noch immer nicht verfügbar ist.

18. Das Verfahren nach Anspruch 16, ferner umfassend:
Beenden des leitungsvermittelten Anrufs durch die Mobilstation; und
Senden einer zweiten USSD-Nachricht von der Mobilstation an den Anwesendheitsserver, wobei die zweite USSD-Nachricht einen Hinweis enthält, dass die Mobilstation verfügbar ist.

## Revendications

1. Procédé de gestion d'informations de présence dans un réseau de communication sans fil à commutation de paquets, ledit procédé comprenant les étapes consistant à :
envoyer un message de présence en commutation de paquets entre une unité mobile et un serveur de présence sur le réseau de communication sans fil à commutation de paquets, pendant l'enregistrement initial de l'unité mobile auprès du réseau de communication sans fil à commutation de paquets (14, 15), ledit message de présence en commutation de paquets comprenant des informations de présence pour l'unité mobile et une indication que l'unité mobile supporte les rapports de présence en commutation de circuits ;
envoyer un message d'accusé de réception en commutation de paquets entre le serveur de présence et l'unité mobile, en réponse au message de présence en commutation de paquets (19), ledit message d'accusé de réception en commutation de paquets comprenant une adresse du protocole internet, ci-après dénommé IP, du serveur de présence et une indication que le serveur de présence supporte la gestion des présences en commutation de circuits ;
ensuite, déterminer par l'unité mobile qu'un changement s'est produit dans l'état de présence de l'unité mobile (21, 22) ;
envoyer un message de mise à jour de présence en commutation de circuits entre l'unité mobile et le serveur de présence (23) ; et
mettre à jour les informations de présence pour l'unité mobile sur le serveur de présence (24).

2. Procédé selon la revendication 1, dans lequel l'unité mobile est un équipement d'utilisateur fonctionnant sur un réseau à accès multiple à répartition par code à large bande.

3. Procédé selon la revendication 1, dans lequel l'unité mobile est une station mobile fonctionnant sur un réseau de service général de radiocommunication par paquets.

4. Procédé selon la revendication 1, dans lequel l'étape d'envoi d'un message de mise à jour de présence en commutation de circuits comprend l'envoi d'un message de données de service supplémentaires non structurées, ci-après USSD pour « *Unstructured Supplementary Services Data* », entre l'unité mobile et le serveur de présence.

5. Procédé selon la revendication 4, dans lequel l'étape d'envoi d'un message USSD entre l'unité mobile et le serveur de présence comprend les étapes consistant à :
placer l'adresse IP du serveur de présence dans le message USSD ;
envoyer le message USSD à une passerelle USSD ;
extraire par la passerelle USSD l'adresse IP du serveur de présence dans le message USSD ; et
acheminer le message de mise à jour de présence vers le serveur de présence en utilisant l'adresse IP du serveur de présence qui a été extraite.

6. Procédé, sur une unité mobile, destiné à mettre à jour des informations pour l'unité mobile dans un serveur de présence sur un réseau de communication sans fil à commutation de paquets, ledit procédé comprenant les étapes consistant à :
envoyer entre l'unité mobile et le serveur de présence des informations d'identification et des informations de présence initiales pour l'unité mobile (14, 15), ainsi qu'une indication qu'elle supporte les rapports de présence en commutation de circuits ;
déterminer par l'unité mobile que le serveur de présence supporte la gestion des présences en commutation de circuits ;
ensuite, déterminer par l'unité mobile qu'un changement s'est produit dans l'état de présence de l'unité mobile (21, 22) ;
envoyer un message de mise à jour de présence en commutation de circuits entre l'unité mobile et le serveur de présence (23) ; et
dans lequel les informations de présence pour l'unité mobile sont mises à jour sur le serveur de présence.

7. Procédé selon la revendication 6, dans lequel l'étape d'envoi d'informations d'identification et d'informations de présence initiales entre l'unité mobile et le serveur de présence comprend l'envoi d'un message de présence en commutation de paquets entre l'unité mobile et le serveur de présence pendant l'enregistrement initial de l'unité mobile auprès du réseau de communication sans fil à commutation de paquets, ledit message de présence en commutation de paquets comprenant des informations de présence pour l'unité mobile, un numéro d'identification pour l'unité mobile et une indication que l'unité mobile supporte les rapports de présence en commutation de circuits.

8. Procédé selon la revendication 7, dans lequel l'étape où l'unité mobile détermine que le serveur de présence supporte la gestion des présences en commutation de circuits comprend la réception par l'unité mobile d'un message d'accusé de réception en commutation de paquets envoyé par le serveur de présence en réponse au message de présence en commutation de paquets, ledit message d'accusé de réception en commutation de paquets comprenant une indication que le serveur de présence supporte la gestion des présences en commutation de circuits.

9. Procédé selon la revendication 6, dans lequel l'unité mobile est un équipement d'utilisateur fonctionnant sur un réseau à accès multiple à répartition par code à large bande.

10. Procédé selon la revendication 6, dans lequel l'unité mobile est une station mobile fonctionnant sur un réseau de service général de radiocommunication par paquets.

11. Procédé selon la revendication 6, dans lequel l'étape d'envoi d'un message de mise à jour de présence en commutation de circuits comprend l'envoi d'un message USSD entre l'unité mobile et le serveur de présence.

12. Procédé selon la revendication 11, comprenant en outre l'étape consistant à envoyer périodiquement des messages USSD de rafraîchissement entre l'unité mobile et le serveur de présence, si l'état de présence de l'unité mobile n'a pas changé.

13. Procédé de fourniture de rapports d'informations de présence pour une station mobile rattachée pour le fonctionnement en commutation de paquets à un réseau de communication sans fil de type GPRS, ledit procédé comprenant les étapes consistant à :
envoyer un message de présence en commutation de paquets entre la station mobile et le serveur de présence pendant l'enregistrement initial de l'unité mobile auprès du réseau GPRS (33), ledit message de présence en commutation de paquets comprenant des informations de présence pour l'unité mobile, un numéro d'identification pour l'unité mobile et une indication que l'unité mobile supporte les rapports de présence en commutation de circuits ;
recevoir par la station mobile (34) un message d'accusé de réception en commutation de paquets provenant du serveur de présence, en réponse au message de présence en commutation de paquets, ledit message d'accusé de réception en commutation de paquets comprenant une indication que le serveur de présence supporte la gestion des présences en commutation de circuits ;
ensuite, par la station mobile, passer en mode d'attente (35) ;
recevoir par la station mobile un message de recherche pour un appel en commutation de circuits (36) ;
suspendre par la station mobile le fonctionnement GPRS en commutation de paquets (37) ; et
envoyer un message de mise à jour de présence en commutation de circuits entre la station mobile et un serveur de présence sur le réseau GPRS (38), ledit message de mise à jour de présence en commutation de circuits comprenant une indication que la station mobile est indisponible.

14. Procédé selon la revendication 13, dans lequel l'étape d'envoi d'un message de mise à jour de présence en commutation de circuits comprend l'envoi d'un message USSD entre la station mobile et le serveur de présence.

15. Procédé selon la revendication 14, dans lequel l'étape d'envoi d'un message USSD entre la station mobile et le serveur de présence comprend les étapes consistant à :
placer l'adresse IP du serveur de présence dans le message USSD ;
envoyer le message USSD à une passerelle USSD ;
extraire par la passerelle USSD l'adresse IP du serveur de présence dans le message USSD ; et
acheminer le message de mise à jour de présence vers le serveur de présence en utilisant l'adresse IP du serveur de présence qui a été extraite.

16. Procédé selon la revendication 15, dans lequel l'étape d'envoi d'un message USSD entre la station mobile et le serveur de présence comprend également l'étape consistant à placer dans le message USSD le numéro MSISDN, pour « *Mobile Station Integrated Service Digital Network* » *-* Réseau numérique à intégration de services de station mobile, de la station mobile afin d'identifier la station mobile vis-à-vis du serveur de présence.

17. Procédé selon la revendication 16, comprenant en outre l'étape consistant à :
envoyer périodiquement des messages USSD de rafraîchissement entre la station mobile et le serveur de présence pendant l'appel en commutation de circuits, lesdits messages USSD de rafraîchissement comprenant une indication que la station mobile est toujours indisponible.

18. Procédé selon la revendication 16, comprenant en outre les étapes consistant à :
terminer l'appel en commutation de circuits par la station mobile ;
envoyer un second message USSD entre la station mobile et le serveur de présence, ledit second message USSD incluant une indication que la station mobile est disponible.
